# EUROPEAN PATENT APPLICATION

(11) **EP 4 201 649 A1**
(43) Date of publication of application: **28.06.2023**
(21) Application number: 22215420.5
(22) Date of filing: 21.12.2022
(51) Int. Cl.: B29C 64/165, B22F 10/14, B29C 64/218, B29C 64/393, B33Y 10/00, B33Y 50/02

(54) **THREE-DIMENSIONAL OBJECT FABRICATION METHOD, AND THREE-DIMENSIONAL OBJECT FABRICATION SYSTEM**

(30) Priority: 27.12.2021 JP 2021213266
(71) Applicant: Ricoh Company, Ltd., Tokyo 143-8555 (JP)
(72) Inventor: SHINDOH, Hidenori, Tokyo 143-8555 (JP)
(74) Representative: SSM Sandmair

(57) **Abstract**

A three-dimensional object fabrication method of the present disclosure includes forming (S1) a fabrication layer including a fabrication material, applying (S2) a fabrication liquid to the fabrication layer, flattening (S3) the fabrication layer, monitoring (S4) a scattering condition of the fabrication material in the forming and the flattening, and adjusting (S5) at least one of the forming (S1) and the flattening (S3), based on a monitoring result of the scattering condition in the monitoring (S4).

## Description

### BACKGROUND

### Technical Field

The present disclosure relates to a three-dimensional object fabrication method, and a three-dimensional object fabrication system.

### Related Art

Examples of known methods for fabricating a fabricated object that is an aggregated body of a plurality of fabrication layers, include a Selective Laser Sintering (SLS) method in which a laser beam is selectively emitted, an Electron Beam Melting (EBM) method in which an electron beam is emitted, and a Binder Jetting (BJ) method in which a binder (fabrication liquid) is applied. (For example, see Japanese Unexamined Patent Application Publication No. 2021-20371 and Japanese Patent No. 6567948.)

However, a fabrication material scattered onto the fabrication layer freely falls. If a head (an example of a fabrication liquid application unit) is driven while the fabrication material is scattered, the fabrication material scatters over a wider area, which may cause a deterioration of the accuracy of a sensor, or a malfunction when the fabrication material enters into a gap of a part such as a motor. In particular, if the fabrication material sticks to a discharge port of the head, the fabrication liquid may not be discharged properly or the fabrication material may take the shape of an icicle, so that there is an influence on the quality of the fabricated object.

### SUMMARY

The present disclosure has been made in view of the above, and an object thereof is to provide a three-dimensional object fabrication method, a three-dimensional object fabrication apparatus, and a three-dimensional object fabrication system, by which it is possible to reduce a scattering amount of a fabrication material, and prevent a case where a fabrication liquid is not discharged properly or the fabrication material takes the shape of an icicle, which influences the quality of a three-dimensional fabricated object that is a finished product.

In order to solve the above-described problems and achieve the object, a three-dimensional object fabrication method of the present disclosure includes forming a fabrication layer including a fabrication material, applying a fabrication liquid to the fabrication layer, flattening the fabrication layer, monitoring a scattering condition of the fabrication material in the forming and the flattening, and adjusting at least one of the forming and the flattening, based on a monitoring result of the scattering condition in the monitoring.

According to the present disclosure, an effect is achieved by which it is possible to reduce the scattering amount of a fabrication material, and prevent a case where a fabrication liquid is not discharged properly or the fabrication material takes the shape of an icicle, which influences the quality of a three-dimensional fabricated object that is a finished product.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram for explaining an example of a three-dimensional object fabrication method executed by a three-dimensional object fabrication system according to the present embodiment;
FIG. 2 is a diagram for explaining in detail an example of a fabrication step executed by the three-dimensional object fabrication system according to the present embodiment;
FIG. 3 is a diagram for explaining in detail an example of a flattening step executed by the three-dimensional object fabrication system according to the present embodiment;
FIG. 4 is a diagram for explaining in detail an example of a monitoring step executed by the three-dimensional object fabrication system according to the present embodiment;
FIG. 5 is a diagram for explaining in detail an example of the monitoring step executed by the three-dimensional object fabrication system according to the present embodiment;
FIG. 6 is a flowchart illustrating an example of a flow of the monitoring step executed by the three-dimensional object fabrication system according to the present embodiment;
FIG. 7 is a diagram for explaining an example of the flow of the monitoring step executed by the three-dimensional object fabrication system according to the present embodiment;
FIG. 8 is a diagram for explaining an example of a monitoring method in the monitoring step of the three-dimensional object fabrication system according to the present embodiment;
FIGs. 9A and 9B are diagrams for explaining an example of a process of controlling a scattering amount of a material in the three-dimensional object fabrication system according to the present embodiment;
FIG. 10 is a table for explaining an example of the process of controlling the scattering amount of the material in the three-dimensional object fabrication system according to the present embodiment;
FIG. 11 is a diagram for explaining an example of the process of controlling the scattering amount of the material in the three-dimensional object fabrication system according to the present embodiment;
FIG. 12 is a diagram for explaining an example of the process of controlling the scattering amount of the material in the three-dimensional object fabrication system according to the present embodiment;
FIG. 13 is a diagram for explaining an example of a process of setting an initial value of a scattering monitoring timing in the three-dimensional object fabrication system according to the present embodiment;
FIG. 14 is a diagram for explaining an example of a process of calculating optimal material parameters in the three-dimensional object fabrication system according to the present embodiment;
FIG. 15 is a diagram for explaining an example of the process of calculating the optimal material parameters in the three-dimensional object fabrication system according to the present embodiment;
FIG. 16 is a flowchart illustrating an example of a flow of the process of calculating the optimal material parameters in the three-dimensional object fabrication system according to the present embodiment;
FIG. 17 is a diagram for explaining an example of a process of calculating a type and a droplet size of a fabrication liquid discharged from a fabrication liquid application unit in the three-dimensional object fabrication system according to the present embodiment;
FIG. 18 is a diagram for explaining an example of the process of calculating the type and the droplet size of the fabrication liquid discharged from the fabrication liquid application unit in the three-dimensional object fabrication system according to the present embodiment; and
FIG. 19 is a flowchart illustrating an example of a flow of the process of calculating the type and the droplet size of the fabrication liquid discharged from the fabrication liquid application unit in the three-dimensional object fabrication system according to the present embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A three-dimensional object fabrication method, a three-dimensional object fabrication apparatus, and a three-dimensional object fabrication system according to embodiments of the present invention will be described in detail below with reference to the accompanying drawings.

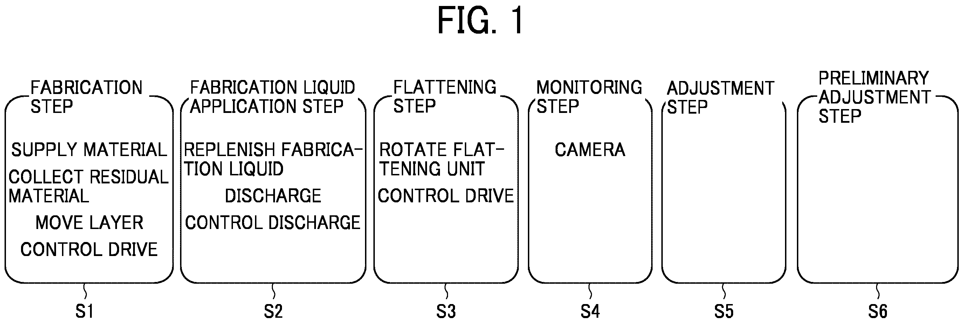

FIG. 1 is a diagram for explaining an example of a three-dimensional object fabrication method executed by a three-dimensional object fabrication system according to the present embodiment. The three-dimensional object fabrication method according to the present embodiment includes, as illustrated in FIG. 1, a fabrication step (S 1), a fabrication liquid application step (S2), a flattening step (S3), a monitoring step (S4), an adjustment step (S5), and a preliminary adjustment step (S6).

The fabrication step (S1) is a step of forming a fabrication layer including a fabrication material. Specifically, the fabrication step (S 1) includes moving a supply layer in a Z (height) direction (upward movement of the supply layer), supplying a fabrication material such as a powder to the supply layer by using a hopper, and collecting a residual material in an excess powder receiver. Here, the supply layer is a layer for the purpose of supplying a material. The excess powder receiver is a layer for collecting excess powder (residual material) remaining from recoating of the supply layer and the fabrication layer. The fabrication layer is a layer in which a thin layer of the material is formed and solidified by using a fabrication liquid.

The fabrication step (S1) further includes drive control including moving the fabrication layer in the Z (height) direction (downward movement of the fabrication layer), moving the fabrication liquid application unit (for example, a head), and moving a flattening unit (for example, a recoater). Here, the fabrication liquid application unit discharges (applies), to the fabrication layer, the fabrication liquid for solidifying the fabrication layer. The flattening unit includes a roller and the like, and flattens the supply layer and the fabrication layer.

The fabrication liquid application step (S2) is a step of applying a fabrication liquid to the fabrication layer from the fabrication liquid application unit. Specifically, the fabrication liquid application step (S2) includes replenishing the fabrication liquid from a fabrication liquid tank to the fabrication liquid application unit, discharging the fabrication liquid from the fabrication liquid application unit, and controlling a discharge amount and a timing of discharging the fabrication liquid from the fabrication liquid application unit.

The flattening step (S3) is a step of flattening the fabrication layer by the flattening unit. Specifically, in the flattening step (S3), when flattening the fabrication layer by the flattening unit, the rotation of the flattening unit (recoat roller) and the drive of the flattening unit are controlled.

The monitoring step (S4) is a step of monitoring a scattering condition of the fabrication material in the fabrication step (S1) and the flattening step (S3). Specifically, in the monitoring step (S4), a camera or the like (an example of a monitoring unit) is used to monitor the scattering condition (a scattering level) of a material such as a powder.

The adjustment step (S5) is a step of adjusting at least one of the fabrication step (S 1) and the flattening step (S3) by an adjustment unit (for example, a processor such as a Central Processing Unit (CPU)) provided in the three-dimensional object fabrication system. Thus, the scattering condition of the fabrication material in the vicinity of a fabrication liquid application unit 105 and a source of the scattering of the fabrication material are monitored, the falling speed of the fabrication material is controlled, the source is controlled considering the characteristics of the size and the weight of the fabrication material, and the like. Therefore, it is possible to reduce the scattering amount of the fabrication material, and prevent a case where the fabrication liquid is not discharged properly or the fabrication material takes the shape of an icicle, which influences the quality of a three-dimensional fabricated object that is a finished product.

Specifically, in the adjustment step (S5), at least one of a movement speed of the fabrication liquid application unit 105 in the fabrication step (S 1), a flattening speed of the flattening step (S3) (for example, a movement speed of the flattening unit), and a rotation speed of the flattening unit (the roller) in the flattening step (S3) is changed, based on a monitoring result of the scattering condition of the fabrication material. For example, in the adjustment step (S5), at least one of the movement speed of the fabrication liquid application unit 105 in the fabrication step (S1), the flattening speed in the flattening step (S3), and the rotation speed of the flattening unit (the roller) in the flattening step (S3) may be changed, based on the falling speed of the fabrication material (an example of the scattering condition of the fabrication material).

The preliminary adjustment step (S6) is a step of adjusting at least one of the fabrication step (S1) and the flattening step (S3) by a preliminary adjustment unit (for example, a processor such as a CPU) included in the three-dimensional object fabrication system, before fabricating the fabricated object that is an aggregated body of a plurality of fabrication layers. Specifically, in the preliminary adjustment step (S6), the flattening step (S3) or the fabrication step (S1) is monitored and material parameters including at least a type, a particle diameter, and density are calculated and stored. According to these material parameters, preliminary adjustment can be performed to decrease scattering. In the preliminary adjustment step (S6), the fabrication step (S1) is monitored and fabrication liquid parameters including at least a type and a droplet size are calculated and stored. According to these fabrication liquid parameters, preliminary adjustment can be performed to decrease scattering. In this case, in the adjustment step (S5), at least one of the fabrication step (S1) and the flattening step (S3) is adjusted, based on the material parameters and the fabrication liquid parameters.

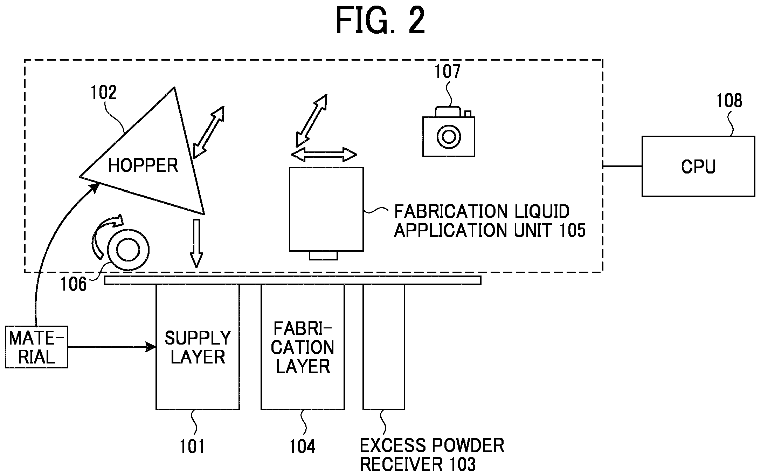

FIG. 2 is a diagram for explaining in detail an example of the fabrication step executed by the three-dimensional object fabrication system according to the present embodiment. Layers included in the three-dimensional object fabrication system are mainly divided into three layers having three purposes (a supply layer 101, a fabrication layer 104, and an excess powder receiver 103). The supply layer 101 is a layer for the purpose of supplying a material. The fabrication layer 104 is a layer in which a flattening unit 106 forms a thin layer of fabrication material from the fabrication material supplied from the supply layer 101 and solidifies the thin layer of fabrication material by using a fabrication liquid. The excess powder receiver 103 is a layer for collecting excess powder (residual material) remaining from recoating of the supply layer 101 and the fabrication layer 104 by the flattening unit 106. The three-dimensional object fabrication system also includes a CPU 108 serving as the adjustment unit.

In the fabrication step, first, the fabrication material is supplied (provided) from a hopper 102 to the supply layer 101. In the provision of the fabrication material to the supply layer 101, the fabrication material may be supplied to the supply layer 101 in advance or the fabrication material in the supply layer 101 may be replenished via the hopper 102.

The flattening unit 106 (recoat roller) is present at one end of the supply layer 101 (an end opposite to an end on the side of the fabrication layer 104), and recoats the supply layer 101, the fabrication layer 104, and the excess powder receiver 103. In the three-dimensional object fabrication system, the fabrication liquid application unit 105 that applies the fabrication liquid is present over the fabrication layer 104. The three-dimensional object fabrication system performs drive control of the flattening unit 106 and the fabrication liquid application unit 105 so that the flattening unit 106 and the fabrication liquid application unit 105 can operate efficiently.

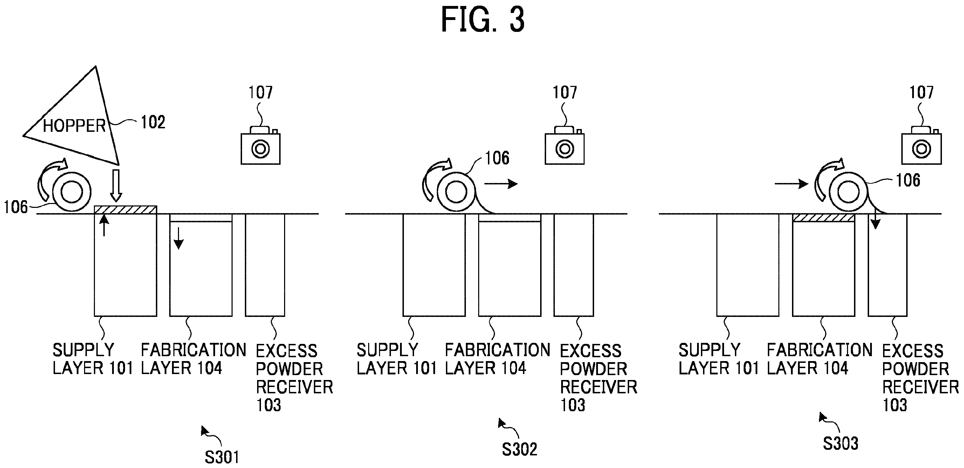

FIG. 3 is a diagram for explaining in detail an example of the flattening step executed by the three-dimensional object fabrication system according to the present embodiment. In the fabrication step, when a material is supplied to the supply layer 101 (step S301), the flattening unit 106 supplies the fabrication material from the supply layer 101 to the fabrication layer 104, and spreads the fabrication material on the fabrication layer 104 (step S302). That is, the flattening unit 106 also functions as an example of a fabrication unit that forms the fabrication layer 104.

Next, in the flattening step, excess fabrication material (residual material, excess powder) in the fabrication layer 104 is dropped into the excess powder receiver 103 (step S303). In the flattening step, steps S301 to S303 are repeated until a predetermined surface is formed on the fabrication layer 104.

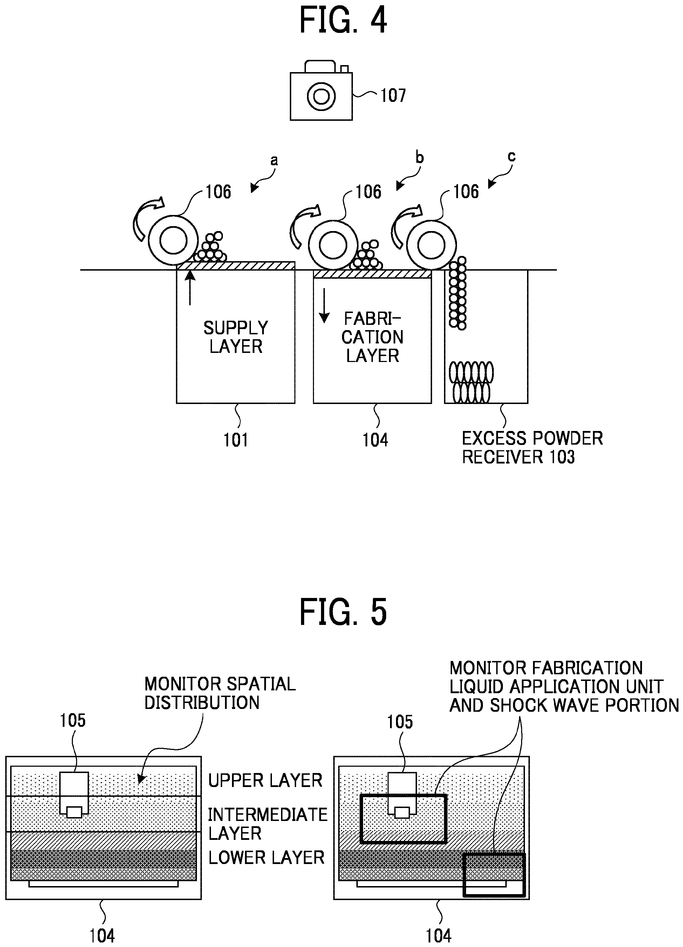

FIGs. 4 and 5 are diagrams for explaining in detail an example of the monitoring step executed by the three-dimensional object fabrication system according to the present embodiment. In the monitoring step, a monitoring unit such as a camera 107 monitors the scattering condition of the fabrication material in the fabrication step and the flattening step. If the camera 107 monitors the flattening step, the fabrication material may scatter in step S302 of FIG. 3. Therefore, in the monitoring step, the camera 107 monitors the entire flattening step.

Specifically, in the monitoring step, a scattering condition of the fabrication material (for example, a scattering level, which is the degree of scattering of the fabrication material) is monitored at operation points indicated by reference signs a, b, and c. In the monitoring step, as illustrated in FIG. 5, the scattering of the fabrication material is controlled so that the scattering of the fabrication material due to a shock wave generated by a condition of the spatial distribution of the fabrication material and the drive of the fabrication liquid application unit 105, is equal to or lower than a certain value.

More specifically, in the monitoring step, an image is acquired, as a spatial image, in an area from the entire fabrication layer 104 to a drive region of the fabrication liquid application unit 105 that applies the fabrication liquid, and the scattering condition is monitored based on the image. The spatial image is acquired continuously at predetermined intervals or in each step. Here, the spatial image is an image in an area from the entire fabrication layer 104 to the drive region of the fabrication liquid application unit 105. In other words, the spatial image is an image including the entire region of the fabrication layer 104, the drive region of the fabrication liquid application unit 105, and a space region therebetween. Here, the steps include the fabrication step, the fabrication liquid application step, and the flattening step. In the monitoring step, the scattering condition of the fabrication material is monitored, based on the spatial image. The drive region of the fabrication liquid application unit 105 includes a scheduled passage region of the fabrication liquid application unit 105 with respect to a traveling direction of the fabrication liquid application unit 105 in the fabrication step.

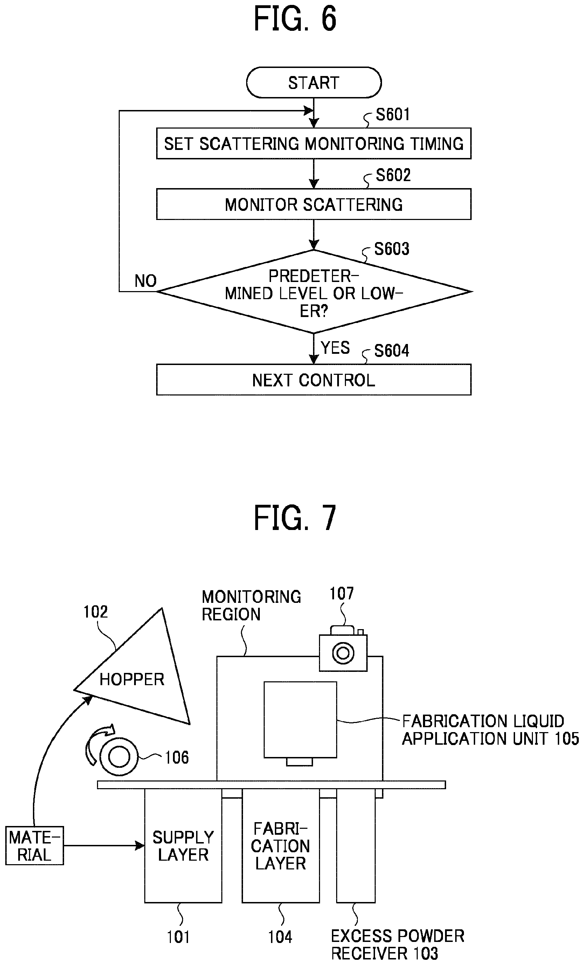

FIG. 6 is a flowchart illustrating an example of a flow of the monitoring step executed by the three-dimensional object fabrication system according to the present embodiment. FIG. 7 is a diagram for explaining an example of the flow of the monitoring step executed by the three-dimensional object fabrication system according to the present embodiment.

The time required for eliminating the scattering of the fabrication material varies according to differences in the type of the fabrication material used to fabricate the fabricated object that is an aggregated body of a plurality of the fabrication layers 104. Therefore, in the monitoring step, a scattering monitoring timing is set by using the type, the particle diameter, the density, and the like of the fabrication material as material parameters (step S601). Here, the scattering monitoring timing is a timing for monitoring the scattering of the material in the fabrication step and the flattening step.

Next, in the monitoring step, the camera 107 monitors the scattering condition of the material at the scattering monitoring timing (step S602). In the present embodiment, in the monitoring step, as illustrated in FIG. 7, the camera 107 monitors a monitoring region including a drive region of the fabrication liquid application unit 105.

Next, in the monitoring step, it is determined whether the degree of scattering (scattering condition) of the monitored material is equal to or less than a predetermined level (step S603). Here, the predetermined level is a degree of scattering of the material set in advance, and is a threshold value of a scattering condition determining a stop of the scattering of the material. If the scattering condition is higher than the predetermined level (step S603: No), the monitoring step returns to step S601 and the scattering of the material is monitored again.

On the other hand, if the scattering condition is equal to or less than the predetermined level (step S603: Yes), the monitoring step proceeds to the next control action (step S604).

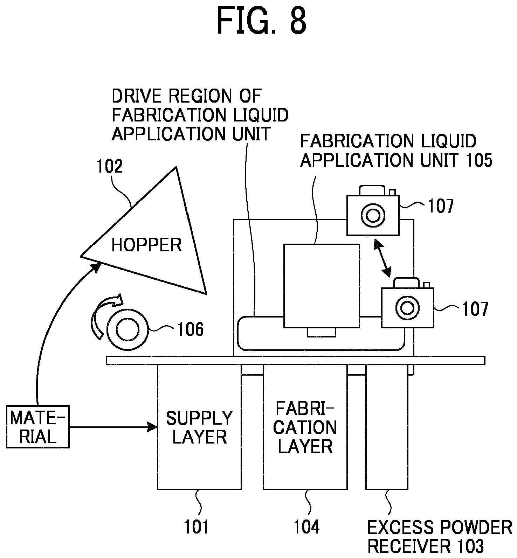

FIG. 8 is a diagram for explaining an example of a monitoring method in the monitoring step of the three-dimensional object fabrication system according to the present embodiment. If the fabrication material scattered in the fabrication step and the flattening step adheres to a discharge unit of the fabrication liquid application unit 105, a powder surface may be destroyed due to improper discharge of the fabrication liquid from the fabrication liquid application unit 105, adhesion of the fabrication material in the form of icicles to the fabrication liquid application unit 105, and the like. Therefore, in the present embodiment, the camera 107 is provided to monitor (capture) the drive region of the fabrication liquid application unit 105.

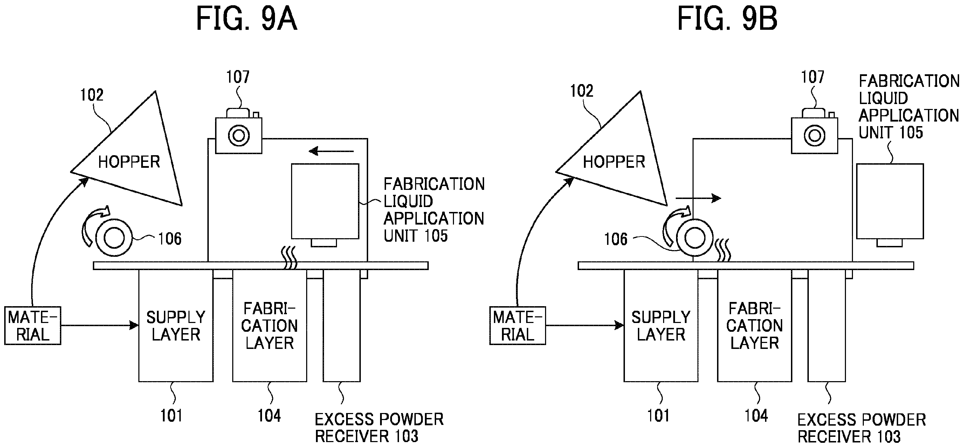

FIGs. 9A and 9B are diagrams for explaining an example of a process of controlling the scattering amount of the material in the three-dimensional object fabrication system according to the present embodiment. In the present embodiment, the three-dimensional object fabrication system reduces the scattering of the fabrication material when the scattering condition exceeds the predetermined level as a result of monitoring the scattering of the fabrication material in the monitoring step.

For example, as illustrated in FIG. 9A, the three-dimensional object fabrication system reduces the scattering amount of the fabrication material by lowering a drive speed (movement speed) of the fabrication liquid application unit 105. For example, as illustrated in FIG. 9B, the three-dimensional object fabrication system may reduce the scattering amount of the material by lowering at least one of the movement speed (an example of the flattening speed in the flattening step) of the flattening unit 106 and the rotation speed of the flattening unit 106. At that time, the three-dimensional object fabrication system may monitor a density of the material in a target region, based on an image of the target region, which is the drive region of the fabrication liquid application unit 105, captured by the camera 107, for example.

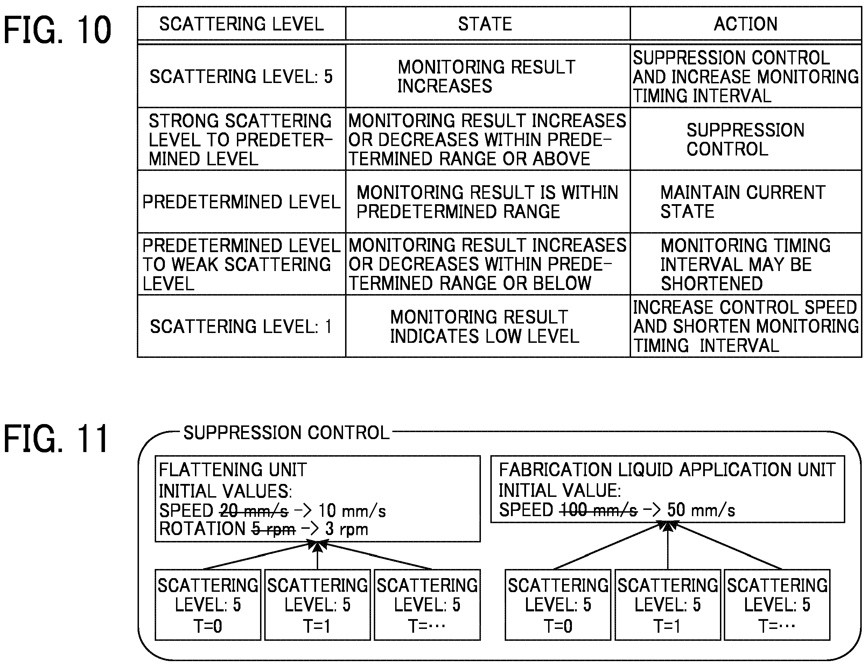

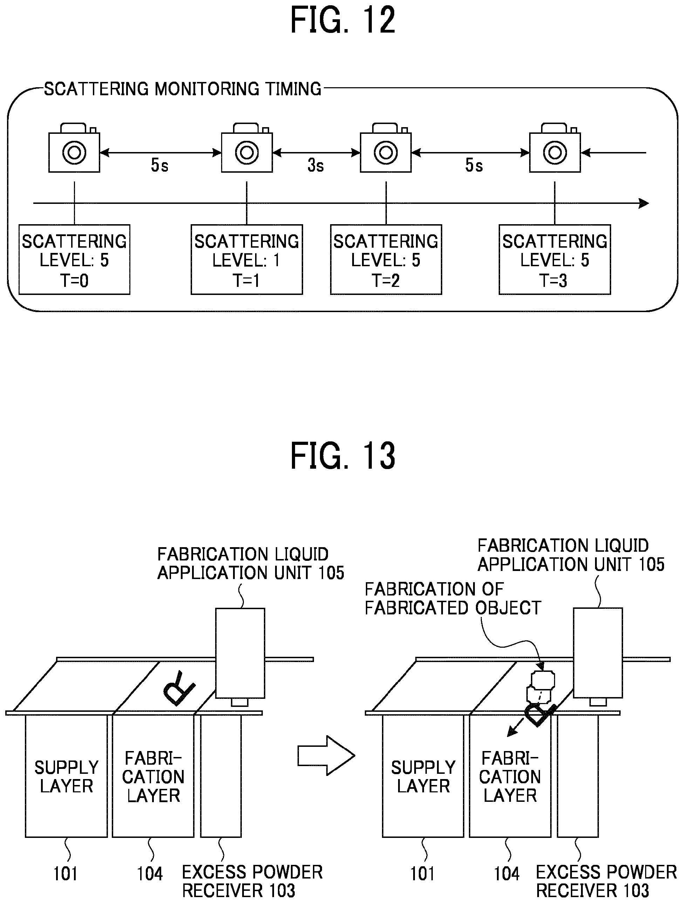

FIGs. 10 to 12 are a table and diagrams for explaining an example of the process of controlling the scattering amount of the material in the three-dimensional object fabrication system according to the present embodiment. For example, when the scattering condition (scattering level) is the maximum scattering level: 5, the three-dimensional object fabrication system reduces the scattering amount of the fabrication material. Specifically, when the scattering level is the scattering level: 5, as indicated in FIG. 10, the three-dimensional object fabrication system determines that the scattering amount of the fabrication material (that is, the monitoring result of the scattering of the material) increases. As illustrated in FIG. 11, the three-dimensional object fabrication system reduces the drive speed (movement speed) of the flattening unit 106 from 20 mm/s to 10 mm/s, reduces the rotation speed of the flattening unit 106 from 5 rpm to 3 rpm, and reduces the drive speed (movement speed) of the fabrication liquid application unit 105 from 100 mm/s to 50 mm/s. As illustrated in FIG. 12, the three-dimensional object fabrication system increases an interval of the scattering monitoring timing from an initial value: 3 s to 5 s.

For example, if the scattering level of the fabrication material is higher than the predetermined level and the scattering level is a scattering level: 4, which is lower than the scattering level: 5, the three-dimensional object fabrication system determines that the scattering level of the fabrication material (the monitoring result of the scattering of the fabrication material) increases and decreases within a predetermined range or above, as indicated in FIG. 10. Subsequently, the three-dimensional object fabrication system reduces the scattering amount of the fabrication material.

If the scattering level of the fabrication material is a predetermined level, that is, a scattering level: 3, the three-dimensional object fabrication system determines, as indicated in FIG. 10, that the scattering level of the fabrication material is within a predetermined range, and maintains the current scattering amount of the fabrication material, without reducing the scattering amount.

If the scattering level of the fabrication material is lower than the predetermined level and the scattering level is a scattering level: 2, which is higher than a scattering level: 1, the three-dimensional object fabrication system determines that the scattering level of the fabrication material (the monitoring result of the scattering of the fabrication material) increases and decreases within a predetermined range or below, as indicated in FIG. 10. The three-dimensional object fabrication system may shorten the interval of the scattering monitoring timing from 5 s to 3 s.

If the scattering level of the fabrication material is the minimum scattering level: 1, the three-dimensional object fabrication system determines that the scattering level of the fabrication material (the monitoring result of the scattering of the material) is a low level, as indicated in FIG. 10. Subsequently, the three-dimensional object fabrication system increases at least one of the drive speed of the flattening unit 106 and the rotation speed of the flattening unit 106, and shortens the interval of the scattering monitoring timing.

In the present embodiment, the three-dimensional object fabrication system sets the initial value of the scattering monitoring timing, based on material parameters such as the type, the particle diameter, and the density of the fabrication material. After that, the three-dimensional object fabrication system updates the scattering monitoring timing, based on monitoring results of the scattering level in each of the fabrication step and the flattening step.

FIG. 13 is a diagram for explaining an example of a setting process of the initial value of the scattering monitoring timing in the three-dimensional object fabrication system according to the present embodiment. In the present embodiment, before starting the fabrication of the fabricated object that is an aggregated body of the fabrication layers 104, the three-dimensional object fabrication system fabricates a test chart (for example, "R") for confirming the scattering condition of the fabrication material, to set initial values of the scattering monitoring timing, the movement speed of the flattening unit 106, and the rotation speed of the flattening unit 106. After that, the three-dimensional object fabrication system starts fabrication of the fabricated object.

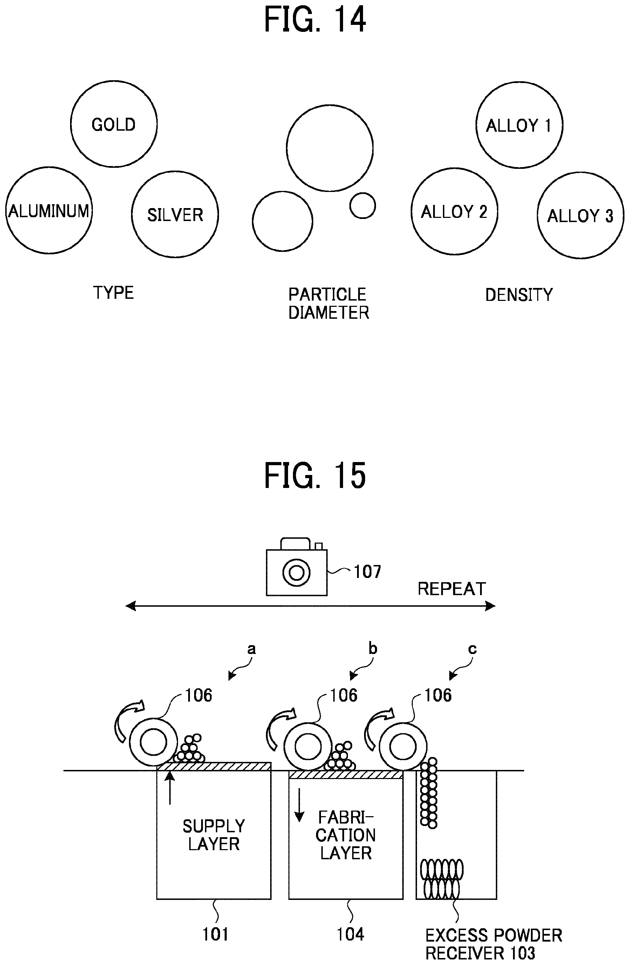

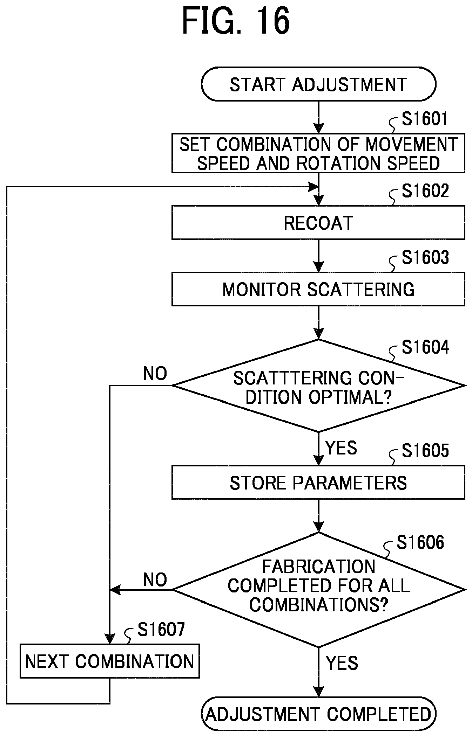

FIGs. 14 and 15 are diagrams for explaining an example of a process of calculating optimal material parameters in the three-dimensional object fabrication system according to the present embodiment. FIG. 16 is a flowchart illustrating an example of a flow of the process of calculating the optimal material parameters in the three-dimensional object fabrication system according to the present embodiment.

As illustrated in FIG. 14, if there is a difference in at least one or more of the material parameters including the type, the particle diameter, and the density of the fabrication material, a scattering mode of the fabrication material during the fabrication of the fabricated object differs. Therefore, in the three-dimensional object fabrication system according to the present embodiment, as illustrated in FIG. 15, a combination of the movement speed and the rotation speed of the flattening unit 106 is selected for each combination of at least one material parameters including the type, the particle diameter, and the density of the fabrication material, to repeat the movement of the flattening unit 106 with respect to the supply layer 101, the fabrication layer 104, and the excess powder receiver 103. Subsequently, in the three-dimensional object fabrication system according to the present embodiment, the scattering level of the fabrication material is monitored, to calculate and store the optimal material parameters.

Specifically, the three-dimensional object fabrication system first sets a combination of the movement speed, the rotation speed, and the like of the flattening unit 106 (step S1601). Next, the three-dimensional object fabrication system uses the flattening unit 106 to recoat the supply layer 101, the fabrication layer 104, and the excess powder receiver 103 (step S1602). Further, the three-dimensional object fabrication system uses the camera 107 to monitor the scattering condition of the fabrication material (step S 1603).

Next, the three-dimensional object fabrication system determines whether the scattering condition of the fabrication material is optimal (step S1604). For example, if the scattering condition of the fabrication material is at a predetermined level, the three-dimensional object fabrication system determines that the scattering condition of the fabrication material is optimal. If the scattering condition of the fabrication material is optimal (step S1604: Yes), the three-dimensional object fabrication system stores the material parameters most recently set (step S1605).

Next, the three-dimensional object fabrication system determines whether the fabrication is completed for all combinations of material parameters (step S1606). If the fabrication is completed for all combinations of material parameters (step S1606: Yes), the three-dimensional object fabrication system stops setting combinations of material parameters.

On the other hand, if the scattering condition of the fabrication material is not optimal (step S1604: No) and if the fabrication is not completed for all combinations of material parameters (step S1606: No), the three-dimensional object fabrication system changes the combination of material parameters (step S1607) to repeat the processing illustrated in steps S1602 to S1606.

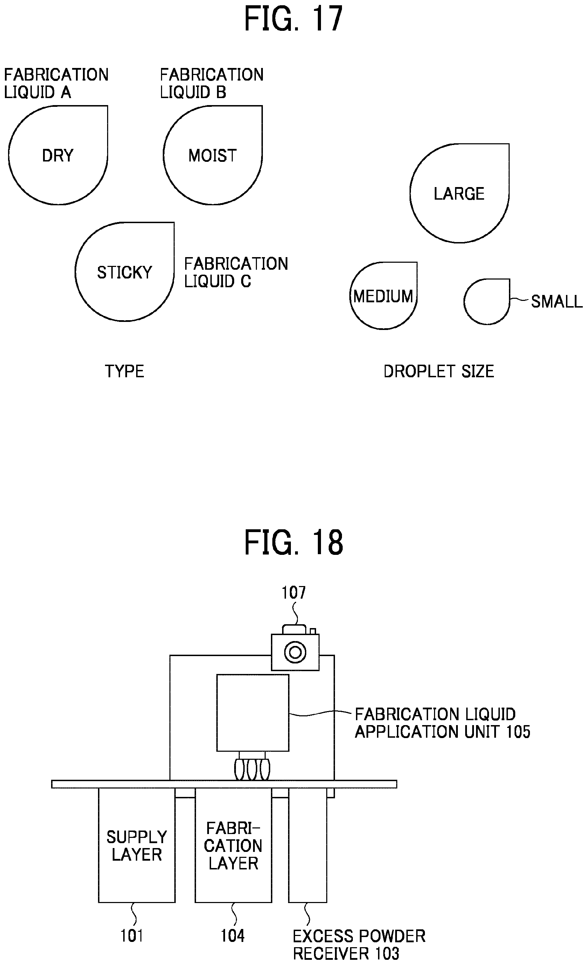

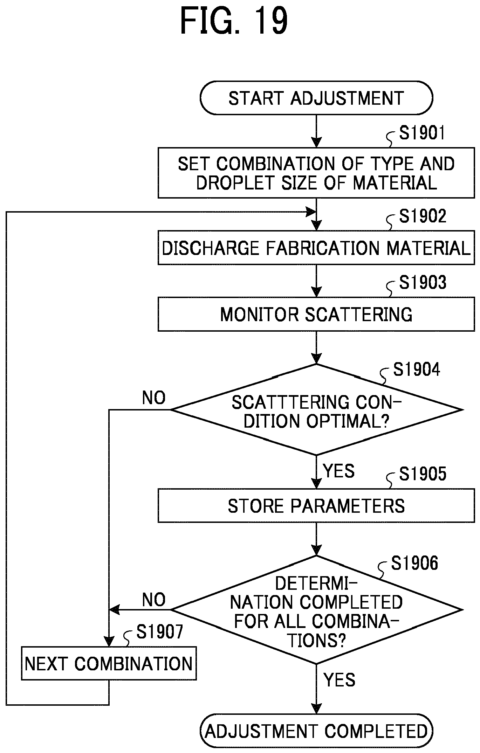

FIGs. 17 and 18 are diagrams for explaining an example of a process of calculating the type and the droplet size of the fabrication liquid discharged from the fabrication liquid application unit in the three-dimensional object fabrication system according to the present embodiment. FIG. 19 is a flowchart illustrating an example of a flow of the process of calculating the type and the droplet size of the fabrication liquid discharged from the fabrication liquid application unit in the three-dimensional object fabrication system according to the present embodiment.

If there is a difference in at least one or more of the fabrication liquid parameters including the type and the droplet size of the fabrication liquid, the scattering mode of the fabrication material during the fabrication step of the fabricated object differs. Therefore, in the three-dimensional object fabrication system according to the present embodiment, as illustrated in FIGs. 17 and 18, the scattering condition of the fabrication material is monitored for each combination of the type of and the droplet size of the fabrication liquid, to calculate and store optimal fabrication liquid parameters such as the type and the droplet size of the fabrication liquid.

Specifically, the three-dimensional object fabrication system first sets a combination of the type and the droplet size of the fabrication liquid (step S 1901). Next, the three-dimensional object fabrication system discharges the fabrication liquid from the fabrication liquid application unit 105 (step S1902). At that time, the three-dimensional object fabrication system uses the camera 107 to monitor the scattering condition of the fabrication material within the drive region of the fabrication liquid application unit 105 (step S 1903).

Next, the three-dimensional object fabrication system determines whether the scattering condition of the fabrication material is optimal (step S1904). For example, if the scattering condition of the fabrication material is at a predetermined level, the three-dimensional object fabrication system determines that the scattering condition of the fabrication material is optimal. If the scattering condition of the fabrication material is optimal (step S1904: Yes), the three-dimensional object fabrication system sets and stores, as the optimal parameter combination, a combination of fabrication liquid parameters most recently set (step S1905).

Next, the three-dimensional object fabrication system determines whether the determination of whether the scattering condition is optimal is completed for all combinations of fabrication liquid parameters (step S 1906). If it is determined for all combinations of fabrication liquid parameters whether the scattering condition is optimal (step S1906: Yes), the three-dimensional object fabrication system stops setting fabrication liquid parameters.

On the other hand, if the scattering condition of the fabrication material is not optimal (step S 1904: No) and if the determination of whether the scattering condition is optimal is not completed for all combinations of fabrication liquid parameters (step S1906: No), the three-dimensional object fabrication system changes the combination of fabrication liquid parameters (step S1907) to repeat the processing illustrated in steps S 1902 to S 1906.

According to the three-dimensional object fabrication system in the present embodiment, the scattering condition of the fabrication material in the vicinity of the fabrication liquid application unit 105 and the source of the scattering of the fabrication material are monitored, the falling speed of the fabrication material is controlled, the source is controlled considering the characteristics of the size and the weight of the fabrication material, and the like. Therefore, it is possible to reduce the scattering amount of the fabrication material, and prevent a case where the fabrication liquid is not discharged properly or the fabrication material takes the shape of an icicle, which influences the quality of the three-dimensional fabricated object that is the finished product. Any one of the above-described operations may be performed in various other ways, for example, in an order different from the one described above.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

## Claims

1. A three-dimensional object fabrication method comprising:
forming (S1) a fabrication layer including a fabrication material;
applying (S2) a fabrication liquid to the fabrication layer;
flattening (S3) the fabrication layer;
monitoring (S4) a scattering condition of the fabrication material in the forming (S1) and the flattening (S3); and
adjusting (S5) at least one of the forming (S1) and the flattening (S3), based on a monitoring result of the scattering condition in the monitoring (S4).

2. The three-dimensional object fabrication method according to claim 1, wherein the monitoring (S4) includes:
acquiring an image including an entire region of the fabrication layer, a drive region of a fabrication liquid application unit that applies the fabrication liquid, and a space region therebetween; and
monitoring the scattering condition based on the image.

3. The three-dimensional object fabrication method according to claim 2, wherein the monitoring (S4) includes:
monitoring a scheduled passage region of the fabrication liquid application unit with respect to a traveling direction of the fabrication liquid application unit in the forming (S1).

4. The three-dimensional object fabrication method according to claim 2 or 3, wherein the adjusting (S5) includes:
changing at least one of a movement speed of the fabrication liquid application unit in the forming (S1), a flattening speed in the flattening (S3), and a rotation speed of a flattening unit in the flattening (S3), in response to a monitoring result of the scattering condition.

5. The three-dimensional object fabrication method according to claim 4, wherein the adjusting (S5) includes:
changing at least one of the movement speed, the flattening speed, and the rotation speed, based on a falling speed of the fabrication material.

6. The three-dimensional object fabrication method according to any one of claims 1 to 5, further comprising:
preliminarily adjusting (S6) at least one of the forming (S1) and the flattening (S3), before fabrication of a fabricated object being an aggregated body of a plurality of fabrication layers including the fabrication layer.

7. The three-dimensional object fabrication method according to claim 6, wherein the preliminarily adjusting (S6) includes:
monitoring the flattening (S3) or the forming (S1): and
calculating material parameters including a type, a particle diameter, and a density of the fabrication material.

8. The three-dimensional object fabrication method according to claim 7, wherein the preliminarily adjusting (S6) includes:
monitoring the forming (S 1): and
calculating fabrication liquid parameters including a type and a droplet size of the fabrication liquid.

9. The three-dimensional object fabrication method according to claim 8, wherein the adjusting (S5) includes:
adjusting at least one of the forming (S1) and the flattening (S3), based on the material parameters and the fabrication liquid parameters.

10. A three-dimensional object fabrication system comprising:
a fabrication unit (102, 103, 106) configured to form a fabrication layer (104) including a fabrication material;
a fabrication liquid application unit (105) configured to apply a fabrication liquid to the fabrication layer (104);
a flattening unit (106) configured to flatten the fabrication layer (104);
a monitoring unit (107) configured to monitor a scattering condition of the fabrication material in the fabrication unit (102, 103, 106) and the flattening unit (106); and
an adjustment unit (108) configured to adjust at least one of the fabrication unit and the flattening unit, based on a monitoring result of the scattering condition by the monitoring unit (107).
